# EUROPEAN PATENT APPLICATION

(11) **EP 4 432 028 A1**
(43) Date of publication of application: **18.09.2024**
(21) Application number: 23161449.6
(22) Date of filing: 13.03.2023
(51) Int. Cl.: G05B 19/418

(54) **METHOD FOR ASSISTING AN ENERGY CONSUMPTION OPTIMIZATION OF AN INDUSTRIAL PLANT SITE**

(71) Applicant: BASF SE, 67056 Ludwigshafen am Rhein (DE)
(72) Inventor: Beckert, Verena, 524002 Zhanjiang (CN); Engel, Daniel, 67061 Ludwigshafen am Rhein (DE); Becker, Markus Bernhardt, 67061 Ludwigshafen am Rhein (DE); Pack, Robert, 67061 Ludwigshafen am Rhein (DE); Arcos-Diaz, Dario, 67061 Ludwigshafen am Rhein (DE)
(74) Representative: Eisenführ Speiser

(57) **Abstract**

The invention refers to a method 200 for assisting an energy consumption optimization of an industrial plant site. Senor data is received 210 from sensors, wherein the sensor data of a sensor comprises time series data and/or descriptive data, wherein the time series data comprises measurements performed by the sensor and the descriptive data comprises descriptive information on the sensor. A cluster of sensors indicating a contextual cohesion of the measurements of the respective sensors is determined 220, wherein the cluster is determined based on the sensor data of the plurality of sensors. A waste heat and/or heat sink potential for the cluster is determined 230 based on sensor data of the sensors belonging to the cluster. Control signals are provided 240 based on the waste heat and/or heat sink potential for optimizing an energy consumption of the industrial plant site.

## Description

### FIELD OF THE INVENTION

The invention relates to a method, an apparatus and a computer program product for assisting an energy consumption optimization of an industrial plant site. Further, the invention relates to a use of the method, apparatus and computer program product for assisting an energy consumption optimization of an industrial plant site.

### BACKGROUND OF THE INVENTION

The EU has committed to a reduction of greenhouse gas emissions by 55% until 2030. Thereby, increasing energy efficiency is a key lever to reduce emissions, since more than 50% of emissions originate from energy consumption. In the chemical industries, about 28% of industrial and 10% of overall final energy is consumed globally. As a result, increasing energy efficiency by reutilizing otherwise wasted energy in the form of heat bears high potential for meeting global sustainability targets.

### SUMMARY OF THE INVENTION

It is an object of the present invention to provide a method, an apparatus and a computer program product that allow for an automatic, objective and technical resource conserving assisting in the optimization of an energy consumption of an industrial plant site, in particular, a large scale chemical industrial plant site.

Through the utilization of waste heat, energy that would otherwise be lost to the environment is reintegrated as an energy source into the production process and thus reduces the overall energy consumption of a production process. Generally, since waste heat is typically at lower temperature levels, it is worth less than the high-exergy enthalpy flows, for instance, used for stream generation. However, the demand for lower temperature entropy flows for heating cooler process streams is immense. Moreover, the application of industrial scale heat pumps can facilitate the heat integration measures with the support of electrical power. Thus, finding waste heat sources and optionally also heat sinks and reintegrating the heat sources, for instance, with the found heat sinks, allows for a strong reduction of the energy consumption of an industrial plant.

However, such an energy optimization of large production sites, in particular, large chemical production sites, is often inefficient, time-consuming, and does not lead to the expected outcome. One reason for this is that at large chemical production sites it is often unknown where the waste heat is really emitted and where potential heat sinks could be found that could profit from respective waste heat. Moreover, for an energy optimization process, it would not only be advantageous if the location of a respective waste heat source is known but also if the heat flow magnitude and the respective temperature level of the respective waste heat location would be known. At present, this data can only be provided by a time-consuming manual work, for instance, by questioning respective plant personnel and gathering the data from these questionnaires.

Thus, optimizing the energy consumption of a complex large scale industrial plant is still a challenging task. It would therefore be advantageous if an automated, objective and technical resource conserving possibility for optimizing an energy consumption of an industrial plant could be provided.

A determination of a cluster of sensors that indicates a contextual cohesion of measurements of respective sensors based on the sensor data of the plurality of sensors, allows to determine sensors that provide sensor data in the same context, for instance, with respect to the same technical unit of a plant site, utilizing already existing data and data infrastructure such that this process can be performed in a fast, objective and accurate manner. Moreover, since it has been found by the inventors that the sensor cluster are clearly indicative also for underlying operating structures, in particular, operating units, the determined sensor clusters allow for a clear structuring of the industrial plant site without the necessity of manual and subjective information provided by plant operators. Thus, the sensor data of respective clusters indicating the technical structure of the industrial plant site, can be utilized for a fast evaluation whether the respective technical structure indicated by the cluster of sensors could be a heat source or a heat sink. Thus, since the waste heat and/or heat sink potential of a respective cluster is determined based on the already existing sensor data of the sensors belonging to the cluster, the potential of the cluster, i.e. of a technical structure, in an industrial plant site can also be determined fast, i.e. technical resource conserving, objectively and automatically. Accordingly, control signals can be provided based on the determined waste heat and/or heat sink potential for optimizing the energy consumption of a respective industrial plant site. Thus, the energy consumption of industrial plant site can be optimized to reach the respective environment conserving goals.

In a first aspect of the present invention, a computer implemented method is presented for assisting an energy consumption optimization of an industrial plant site, wherein the industrial plant site comprises a plurality of sensors, in particular, comprising mass flow and temperature sensors, providing time series data, wherein the method comprises a) receiving senor data from the plurality of sensors, wherein the sensor data of a sensor comprises time series data and/or descriptive data, wherein the time series data comprises measurements performed by the sensor and the descriptive data comprises descriptive information on the sensor, b) determining a cluster of sensors indicating a contextual cohesion of the measurements of the respective sensors, wherein the cluster is determined based on the sensor data of the plurality of sensors, c) determining a waste heat and/or heat sink potential for the cluster based on sensor data of the sensors belonging to the cluster, and d) providing control signals based on the waste heat and/or heat sink potential for optimizing an energy consumption of the industrial plant site.

The method refers to a computer implemented method and thus can be performed by a general or dedicated computer adapted to perform the method, for instance, by executing a respective computer program. The method is configured for assisting an energy consumption optimization of an industrial plant site, preferably, a chemical industrial plant site for producing one or more chemical products. In particular, the assisting can refer to the localizing and analyzing of potential waste heat sources and/or heat sinks such that an optimization of the energy consumption can be performed by utilizing the respective localized and analyzed heat sources and/or heat sinks of the industrial plant site.

Generally, the industrial plant site comprises a plurality of sensors that provide time series data. Preferably, the plurality of sensors comprise mass flow and temperature sensors. However, also other sensors can be utilized, for instance, pressure sensors, CO₂ sensors, oxygen sensors, particle sensors, etc. that are indicative of the processes performed at a respective structure, for example, an operation asset, of the industrial plant site. Generally, time series data comprise time-dependent data values that refer to measurements of a sensor provided in the industrial plant, for instance, for monitoring a production process of the industrial plant. Accordingly, time series data can also be regarded as control data utilized for monitoring and controlling an industrial plant. Further, the time series data can be associated with a tag, wherein the tag can be indicative of an identity of the sensor of the industrial plant that has provided the respective time-dependent data values. For example, a time series data provided by a temperature sensor can refer to a time series of temperature measurements provided by the temperature sensor, for instance, in a chemical reactor during the production of a specific product. The temperature sensor can be, for instance, adapted to provide a temperature measurement every few seconds that is stored as time series data in association with the respective tag indicative of the identity of the temperature sensor in a respective storage. Further, the time series data can comprise, in addition to the time-dependent data values, also time stamps associated with the time-dependent data values to indicate the time at which the time-dependent data values have been measured. However, the time stamps can also be omitted and for example a time difference between to measurements can be stored or a general construction of the sensor can indicate that the measurements are always performed in the same timely sequence. Without limiting the generality or scope of the present teachings, the time series data can refer to an in order insert time series data that is defined by the most recently inserted, i.e. stored, time-dependent data value associated with the time series data being the time-dependent data value associated with the most recent time stamp compared with all other time stamps associated with already stored time-dependent data values. Thus, an in order insert time series data can be regarded as referring to a time series data set in which all time-dependent data values are stored subsequently, i.e. in order of the associated time stamps. However, also other possibilities for storing the time series data can be utilized.

In a first step, sensor data from the plurality of sensors at the industrial plant site is received. For example, the sensor data of the plurality of sensors can be stored on a data storage, for instance, a data archive, and the receiving can comprise accessing the respective data storage and reading out the sensor data of the plurality of sensors. However, the receiving can also comprise receiving the sensor data via a sensor data interface that provides the sensor data, for instance, from a respective data storage, directly from the sensors, or also from an input unit into which a user can, for instance, indicate the sensor data to be received. The sensor data of a sensor comprises time series data and/or descriptive data. As already described above, the time series data comprises measurements, in particular, measurement values, performed by the sensor. Additionally, the time series data can comprise, as also already described above, time stamps indicating the time at which the measurements have been taken. Further the time series data can be associated with a tag indicative of an identity of the sensor. However, these additions can also be omitted.

The descriptive data comprises descriptive information on the respective sensor. Descriptive information refers to information that is related to the sensor itself and not to the measurements performed by the sensor. For example, the tag described above with respect to the time series data can also be part of the descriptive data indicating the identity of the sensor. Moreover, the descriptive information on the sensor can relate to any of an identity, a location of the sensor, a function of a sensor, a relation of the sensor with other sensors or with parts of the industrial plant site, technical specifications of the sensor, etc. the descriptive data is provided in form of a symbol and/or character string. For example, the descriptive data can comprise numerical characters or alphabetic characters. For example, the descriptive data can comprise a tag relating to a character string of mixed alphabetic and numerical characters and can further comprise a text description indicating the function of the sensor in the industrial plant site. However, the descriptive data can also comprise other symbols. Such descriptive data is often created as part of an installation of a sensor in order to provide a fast information on the sensor to plant workers and also to uniquely identify and associate the sensor and the data provided by the sensor. The such created descriptive data is then stored, for instance, associated with the unique tag of the sensor, on a respective database, for example, as part of the general technical information provided for the industrial plant site.

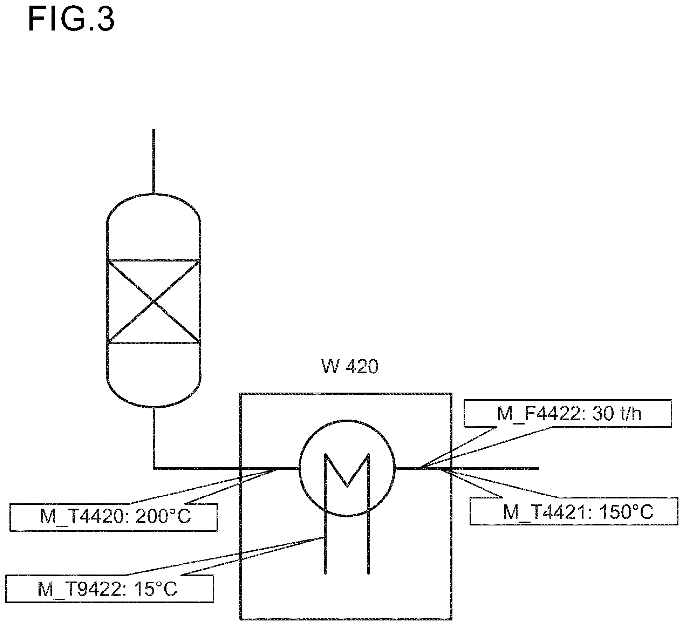

In a next step, a cluster of sensors is determined. A cluster of sensors indicates a contextual cohesion of the measurements of the respective sensors. A contextual cohesion in this context is defined as a relation between the measurements of the sensors defined by the context in which the sensors are utilized. Preferably, the contextual cohesion is defined based on a spatial and/or process topological relation, more preferably, distance, between the sensors and thus also the measurements of the sensors. In particular, a contextual cohesion is given when the sensors measure quantities that depend on each other or the same process performed in the industrial plant site. For example, a temperature measured by a temperature sensor before a heat exchanger, exemplarily shown in Fig. 3, and a temperature measured by a temperature sensor after the heat exchanger are related in a contextual cohesion in the sense that the temperature measured by both sensors depends on the processes performed by the same heat exchanger. Thus, sensor clusters can refer to sensors measuring data related to the same processes in the industrial plant site, for instance, to a heat exchanging process, a chemical reaction process, a mixing process, etc.

Since most of these processes in the industrial plant site are then performed by the same industrial plant site structures, for example, an operation asset, the cluster sensors can also be regarded as being associated with respective plant site structures, for instance, with one or more parts of the technical infrastructure of the industrial plant site. Generally, due to the very complex nature of industrial plant sites, it is not known, *a priori,* which sensors can be regarded as belonging to different respective industrial plant site structures in detail. For example, temperature sensors provided as part of a heat exchanger might be easy to identify for an operator of the industrial plant site, however, a temperature sensor providing a measurement of a room temperature and positioned near the heat exchanger can also be regarded provide data measurements related to the heat exchanger. For example, the temperature sensor can measure if heat is emitted by the heat exchanger. Thus, also this sensor can be regarded as being part of a cluster of sensors associated with the heat exchanger. However, such an association might be more difficult for an operator of the plant to identify. Moreover, even if the relation between all sensors and respective processes in an industrial plant site is known in general, for instance, from the technical construction manuals of the industrial plant site, for a complex industrial plant site it would nearly be impossible to go through the construction manuals and identify all sensors belonging to the respective industrial plant structures. Thus, the inventors have found that it is not only possible but also computational resource conserving and accurate to determine the sensor clusters based on the sensor data of the plurality sensors itself.

In a next step, a waste heat and/or heat sink potential is determined for the cluster based on sensor data of the sensors belonging to the cluster. In particular, it is preferred that the waste heat and/or heat sink potential is determined for each sensor cluster determined for the plurality of sensors of an industrial plant site. However, the waste heat and/or heat sink potential can also be determined for selected sensor clusters, for instance, for sensor clusters indicated by a user as potential heat sources or heat sinks. The determining can refer to simply determining if in a sensor cluster waste heat is produced or not or if in the sensor cluster a heat sink can be identified. Moreover, also a respective amount of produced waste heat or needed heat can be determined as part of determining the waste heat and/or heat sink potential. Generally, known rules and/or physical laws can be utilized for determining the waste heat and/or heat sink potential of a sensor cluster. For example, mass flow measurements of sensors of a cluster can be utilized for determining a flow direction of a substance in the industrial plant unit associated with the sensor cluster and based on the flow direction respective temperature measurements can then be associated with the mass flow direction and an energy balance can be utilized to determine whether it is expected that the industrial plant unit produces waste heat or if the process could benefit from being provided with an additional heat source and thus refers to a heat sink. However, also other rules can be applied and other thermodynamic laws can be utilized, for instance, if the sensor descriptive data indicates that the sensor is measuring the pressure of a gas, changes in the pressure between two sensors can also indicate changes in temperature between the two sensors dependent on the respective thermodynamic laws.

In a preferred embodiment, determining of the waste heat and/or heat sink potential for the cluster comprises determining more than one cluster based on the time series data of the plurality of sensors and selecting the cluster for which a waste heat and/or heat sink potential is determined, wherein a cluster is selected that refers to a single operation asset of the industrial plant site and the waste heat and/or heat sink potential is determined for the selected single operation asset of the industrial plant site. This allows to select only operation assets of an industrial plant site for which it is likely that waste heat is produced or that the respective unit could benefit from an additional heat source. Generally, an operation asset refers to a part of the infrastructure of the industrial plant site that performs a single, defined process and can be realized as an operation unit or operation equipment. The operation asset can be, for example, a heat exchanger, a mixer, a reactor, a pump, a colon, etc., and can thus be operated independent of other operation assets of the industrial plant. Preferably, the selected single operation asset is a heat exchanger unit of the industrial plant site. In particular, heat exchangers provide the potential as heat sources or heat sinks, since heating and cooling processes are performed by the heat exchanger that are often not optimized with respect to the energy consumption. The selection can be based, for instance, on information provided by the descriptive data of sensors associated with the respective cluster, wherein the descriptive data can indicate that the sensor is associated with a heat exchanger unit of an industrial plant. However, it is preferred that the cluster is selected using provided domain knowledge with respect to the single operation assets of the industrial plant site. In this case, the domain knowledge is defined as any knowledge and information from arbitrary sources related to the technical layout of the industrial plant site. For example, a technical blueprint of the industrial plant site can be utilized to determine that a cluster is associated with a single operation asset, for instance, a heat exchanger unit that could provide potential waste heat. Such an embodiment is in particular useful in cases in which a plant operator already has some insights into which single operation assets of the industrial plant site produce waste heat or can benefit from additional heat and are thus regarded as heat sinks.

Preferably, the sensor data comprises mass flow and/or temperature measurements as part of time series data and wherein the waste heat and/or heat sink potential for a cluster is determined based on a mass flow and/or temperature difference determined between sensors of the cluster. Measurement data comprising mass flow and/or temperature measurements allow to derive an mass and energy balance for a respective sensor cluster and thus to determine whether at some point of the operation asset associated with the cluster heat is wasted or a heat sink can be found. However, the mass flow and/or temperature measurements can also be derived from other measurements, for instance, from pressure measurements of a gas, if the respective other measurements are related to mass flow and/or temperature measurements by known physical laws, for instance, thermophysical laws. Thus, the mass flow and/or temperature measurements can also be regarded as virtual measurements and the respective sensors as virtual sensors, wherein the actual measurement is performed by other sensors from which the measurements of the virtual sensors are derivable.

In a last step, control signals are provided based on the waste heat and/or heat sink potential for optimizing an energy consumption of the industrial plant site. For example, the control signals can control a display to display to a user, for instance, an operator of the industrial plant, the locations of the determined waste heat and/or heat sink potentials and the respective potential height. Thus, an operator can, based on these display control signals, control the production processes of the industrial plant, for instance, such that waste heat is reduced or that a heat flow can be provided to a respective heat sink. Moreover, the control signals can be generated such that a maintenance control system is caused to initiate a maintenance process, for instance, indicating the installation of a heat pump in certain locations of the industrial plant. However, the control signals can also directly control a production process of the industrial plant. Preferably, the control signal comprises information on a part of the industrial plant site where waste heat is emitted and/or where a heat sink is located. Moreover, in an embodiment the control signal comprises process parameters for controlling one or more operation assets of the industrial plant to reduce waste heat identified based on the waste heat potential. In a further preferred embodiment, the control signal comprises process parameters for controlling one or more operation assets such that a determined waste heat is integrated with a determined heat sink.

In an embodiment, the sensor data comprises descriptive data, wherein the descriptive data comprises a tag identifying the sensor, and wherein determining the cluster of sensors comprises deriving positional descriptors for the sensors from the tags of the sensors and determining the cluster based on the positional descriptor, wherein the positional descriptor is indicative of the position of the sensor in the industrial plant site. Tags are generally used for identifying the sensor and thus can refer to any kind of character and/or symbol string. In most cases, tags are set during the installation of a sensor, for instance, during a setup of a respective operation asset of the industrial plant comprising the sensor and are then either automatically generated to be associated with the sensor or set manually, for instance, by the workers installing the operation asset. For both cases it has been found by the inventors that tags are generally not generated randomly but systematically in order to allow, for example, during maintenance, not only to identify the sensor but also to be provided with necessary information, for instance, the type of sensor, an installation date, and in particular, a location. Thus, generally when created, the tags comprise some kind of positional descriptor that is indicative of the position of the sensor in the industrial plant. In particular, the positional descriptor can refer to any kind of symbol, character or string of symbols and/or characters with a predetermined meaning in the tag. The meaning of the respective symbols and/or characters can be predetermined based on the rules utilized for creating the tag in an industrial plant. Generally, the meaning can be provided by the respective symbol and/or character, but also by a position of a respective symbol and/or character in the symbol and/or character string of the tag. Based on the rules utilized for creating tags in a respective industrial plant site, the positional descriptors can be identified and derived from the tag of a sensor. For example, a standard rule used in an industrial plant defines to create a tag such that the first three symbols of the tag form a positional descriptor. However, in other examples, a positional descriptor can always be provided starting with the same symbol or character, or certain numbers can be reserved for the positional descriptor, etc. Thus, for instance, a user can indicate rules that can be utilized to derive the positional descriptor from the tags of sensors in an industrial plant site. However, such rules can also be learned, for instance, by a machine learning model provided with a plurality of tags of sensors and also with a plurality of corresponding locations of the sensors. In this case, a machine learning model can then be utilized for deriving the positional descriptors based on the respective tags of the sensors.

A cluster can then be determined based on the positional descriptor identified from the tages. For example, also in this case respective rules can be applied that can be individual for each individual industrial plant site. General rules that can be assumed are that sensors positioned near to each other are for most cases provided with the same or similar positional descriptors. For example, sensors positioned near to each other would only have a positional descriptor that differs in one out of three digits, wherein sensors positioned far away from each other are very likely to be provided with positional descriptors differing in more than one digit from each other. Generally, also in this case trainable machine learning based models can also be utilized for learning the rules and relationships between sensors positioned such that they form a cluster, for instance, are associated with the same operation asset of the industrial plant site, and sensors that are outside of such a cluster. Such machine learning based models can be trained, for instance, based on already established knowledge about clusters of sensors and respective tags at an industrial plant site. The such trained models can then be utilized to identify further clusters.

Preferably, based on the positional descriptors distance metrics for the sensors are determined, wherein a distance metric is indicative for a distance between a sensor and at least one other sensor, and wherein the cluster is determined based on the distance metrics. Generally, the distance metric can be any metric, i.e. any value, that provides a relation to a distance between the respective sensors, wherein the distance can be a spatial distance but also a topological process distance. For example, the distance can be indicative of a spatial distance between two sensors but can also be indicative of whether two sensors belong to the same process and thus to a topological process distance. Generally, the metric does not have to reflect a real absolute spatial or process topological distance between the sensors, but only has to provide a relative distance. For example, the distance metric can be provided such that a smaller value of the distance metric indicates a smaller distance between the sensors than a higher value of the distance metric. However, also more complex relations are possible, for instance, in which a higher value of a distance metric indicates a smaller distance of the sensors. Moreover, the distance metric does not have to be very accurate with respect to the relative spatial or process topological distance between the sensors. In fact, an approximate relation for the distance between the sensors is in mostly all cases suitable to determining different clusters of the sensors based on the distance metric. In fact, it is sufficient that the distance metric allows to distinguish between typical spatial or topological process distances of structures of the industrial plant site. For example, in most industrial plant sites operation assets will be spatially placed with certain security margins and thus will not be directly located next to each other. Also process topologically operation assets will not be provided without a clear distinguishing process topological distance. Thus, it is sufficient if the distance metric is determined such that it allows to distinguish between sensors belonging to one operation asset, e.g. one process, from sensors associated with another operation asset.

The distance metric is preferably determined based on the positional descriptor, wherein respective rules can be set or learned that indicate a relative spatial or process topological distance between the sensors based on the descriptors. For example, a distance metric determined between two sensors with positional descriptor differing in one digit can be set to a predetermined value indicating a small spatial or process topological distance between the two sensors, whereas a distance metric of two sensors differing in two digits can be set to another predetermined value indicating a higher spatial or process topological distance between the two sensors. Thus, the distance metric does not even have to refer to a continuous function but can also refer to a step function, wherein for a certain nearness of the sensors indicated by positional descriptors a first value is utilized as distance metric and for all other distances a second, third, etc. value is preset to indicate a higher distance when indicated by the positional descriptors.

The cluster is then determined based on the distance metric. For example, sensors can be sorted in accordance with their distance with respect to each other as determined by the distance metric and sensors with a predetermined distance metric indicating a respective association of the sensors to an operation asset of the industrial plant can then be identified as clusters. In particular, in such cases, thresholds can be set by a user for the distance metric and the clusters can be determined based on the threshold. For example, if a distance metric below a threshold indicates that the sensors belong to one operation asset, these cluster of sensors can be determined by determining all sensors having a distance metric below the threshold with respect to each other. Preferably, the cluster is determined based on the distance metrics by utilizing a hierarchical clustering utilizing the distance metrics as indication for the hierarchy. For example, an agglomerative hierarchical clustering algorithm can be utilized. The algorithm can start by treating each sensor as a singleton cluster. Next, pairs of clusters can then be merged based on the distance metric until all clusters have been merged into one big cluster containing all sensors. The result is a tree-based representation of the sensor clusters that can be represented as a dendrogram.

In an embodiment, the sensor data comprises descriptive data in the form of a text description and the determining of a cluster comprises a natural language processing of the text descriptors to derive concepts indicative of a position of the sensor and/or relations to other sensors in the industrial plant site, and determining the cluster based on the derived concepts. In this embodiment, that can also be combined with other embodiments for determining clusters as described above, the descriptive data comprises a text description, for example, a text can be created during the installation of the sensor indicating the most important information on the sensor, for example, to allow for an easier maintenance. Such a text description can then be utilized, for instance, when utilizing natural language processing, to determine the sensor clusters. In particular, natural language processing allows to derive concepts from text, wherein in this case the natural language processing can be utilized such that in particular concepts related to a position of a sensor or concepts related to the relations to other sensors are derived from the text description. For example, words and synonyms related to positions or positional relations, like "near", "in front of', "position", etc. can be utilized. However, also predetermined industrial plant site specific character strings can be identified by natural language processing or by comparing the text with a respective predetermined dictionary. Respective sensors can then be sorted based on the derived positional concepts or relational concepts and based on the sorting respective clusters can be determined. Moreover, in an embodiment the text description can also be utilized to determine, based on determined clusters, the kind of operation asset associated with the cluster, in particular, if a determined sensor cluster is associated with a heat exchanging unit. In this case the natural languish processing of the description of the sensor of the cluster can be utilized to parse for concepts that are indicative of the kind of operation asset associated with the cluster. Such concepts can be plant specific or generally known designations of operation asset and/or their functions in a production process.

In an embodiment, the sensor data comprises time series data and the determining of a cluster comprises deriving relations between sensors based on the time series data and determining the cluster based on the derived relation. This embodiment can also be combined with the embodiments described above. For example, if no text description and/or tag is available for a sensor, the respective sensor data can in this embodiment be utilized for determining the clusters. Moreover, this embodiment can also be utilized to verify the sensor clusters determined with any of the other possibilities determined above. However, this embodiment can also be utilized without any of the above described possibilities. Generally, the time series data and thus the measurements of a sensor are related to each other such that they follow respective physical laws. For example, for a respective industrial plant site only a certain temperature difference within one operation asset might be realistic, or for one operation asset it can be assumed that in the piping of an operation asset the same pressure can be measured, etc. Moreover, more complex functional relations allow to determine if a group of sensors measures values for the same industrial process, for example, if a potential sensor cluster belongs to a heat exchanger. In particular, it is preferred that different rules are provided for different processes and associated industrial plant structures. For example, to identify sensory associated with a heat exchanger different rules can be applied than for identifying sensors associated with a mixer. Thus, for an industrial plant a specific set of rules can be provided and/or learned and applied to the measurement data, i.e. the time series data, of the respective sensors to determine a likelihood that at least two sensors belong to the same cluster, for example, to the same operation asset. Moreover, the time series data can also be utilized for determining for already determined sensor clusters with which kind of operation asset they are associated. For example, based on the rules described above and based on the time series data of a sensor cluster it can be determined which rules apply and thus which kind of operation asset can be identified for the sensor cluster.

In a preferred embodiment, the waste heat and/or heat sink potential is determined for a predetermined operation reference time. In this case, sensor data is utilized that is provided within predetermined time limits around the predetermined operation reference time, for instance, sensor data that has been measured within a predetermined time before and/or after the predetermined operation reference time. This allows to avoid utilizing measurements that might be subject to changes during the operation of the industrial plant site. For example, in some cases the temperature measured at the beginning of a heat exchanger might not be constant but might change during a production cycle when producing a product or might depend on which product is produced. Thus, setting a predetermined operation reference time prevents utilizing and comparing measurements that are not related to each other due to their respective timing. Generally, the predetermined operation reference time can be chosen as any time point during the operation of the industrial plant site. Preferable, the reference time is chosen as a time during a typical operation of the industrial plant site. To determine such a typical operation reference time, for example, an operator can set the respective reference time based on his/her experience in operating the industrial plant site. In a preferred embodiment, the operation reference time is automatically determined by determining clusters for the measurement data of the time series data of one or more sensors. For example, the measurement data provided by the time series data of a sensor can be sorted based on the measurement value and based on the measurement values clusters can be determined in which the measurement values cluster around one or more values. From these clusters, respective times at which the measurements fall within the respective cluster can be derived and for each cluster respective operation reference times can be determined. In particular, it has been found by the inventors that the clusters in the measurement data of sensors generally indicate different operation states of the industrial plant site, and by utilizing an operation reference time belonging to one of these clusters and determining the waste heat and/or heat sink potential for this operation reference time, the waste heat and/or heat sink potential is determined for a respective operation state of the industrial plant site and by utilizing different respective operation reference times determined in this way the waste heat and/or heat sink potential can be determined for different, preferably all, operation states of the industrial plant site.

In a further aspect of the invention, an apparatus is presented for assisting an energy consumption optimization of an industrial plant site, wherein the industrial plant site comprises a plurality of sensors comprising mass flow and temperature sensors providing time series data, wherein the apparatus comprises one or more processors configured for a) receiving senor data from the plurality of sensors, wherein the sensor data of a sensor comprises time series data and/or descriptive data, wherein the time series data comprises measurements performed by the sensor and the descriptive data comprises descriptive information on the sensor, b) determining a cluster of sensors indicating a contextual cohesion of the measurements of the respective sensors, wherein the cluster is determined based on the sensor data of the plurality of sensors, c) determining a waste heat and/or heat sink potential for the cluster based on sensor data of the sensors belonging to the cluster, and d) providing control signals based on the waste heat and/or heat sink potential for optimizing an energy consumption of the industrial plant site.

In a further aspect of the invention, a computer program product is presented for assisting an energy consumption optimization of an industrial plant site, wherein the computer program product comprises program code means causing an apparatus as described above to carry out the method as described above.

In a further aspect of the invention, control signals are presented generated by a method as described above and/or an apparatus as described above.

In a further aspect of the invention, a use of the apparatus as described above for optimizing an energy consumption of an industrial plant site is presented.

It shall be understood that the method as described above, the apparatus as described above, and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

In the following drawings:
- Fig. 1: shows schematically and exemplarily a system for optimizing an energy consumption of an industrial plant site,
- Fig. 2: shows a flowchart exemplarily illustrating an embodiment of a method for assisting an energy consumption optimization of an industrial plant site,
- Fig. 3: shows schematically and exemplarily a heat exchanger as an operation asset of an industrial plant site, and
- Figs. 4 to 6: show schematically and exemplarily examples for determining a sensor cluster in an industrial plant site.

### DETAILED DESCRIPTION OF EMBODIMENTS

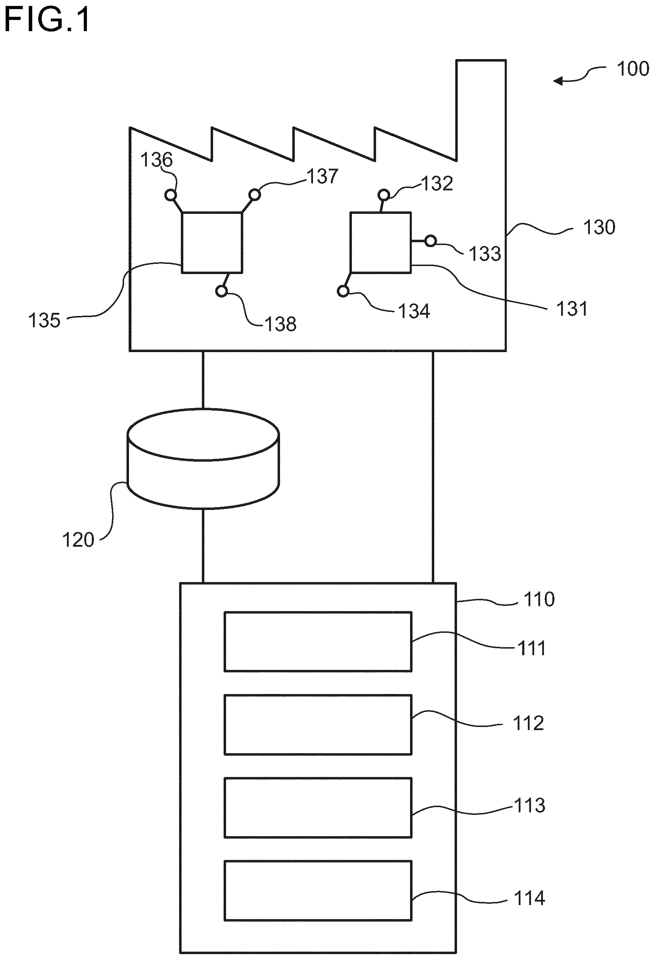

Fig. 1 shows schematically and exemplarily a system for optimizing an energy consumption of an industrial plant site. The system 100 comprises an apparatus 110 for assisting an energy consumption optimization of an industrial plant site 130. Optionally, the system 100 can further comprise a database 120 for storing sensor data from the one or more sensors 132, 133, 134, 136, 137, 138 of the industrial plant site 130. Further, the system 100 can optionally comprise a control system for controlling the industrial plant site 130 that in Fig. 1 is shown as being part of the industrial plant site 130. In this schematic example, the industrial plant site 130 comprises two operation assets 131, 135 that allow the production of a chemical product. The operation assets 131, 135 can be configured for working together to produce a chemical product but can also be completely independent, for instance, each producing another chemical product. Each of the operation assets comprises or is associated with sensors measuring one or more quantities of the operation asset, preferably measuring temperatures and mass flows during an operation of the operation assets 131, 135.

Generally, the industrial plant site 130 can refer to any technical infrastructure that is used for an industrial purpose. The industrial purpose may be manufacturing or processing of one or more industrial products, i.e., a manufacturing process or a processing performed by the industrial plant site. In this example, the industrial purpose refers to the production of a specific product, preferably, a chemical product. The specific product can, for example, be any physical product such as a chemical, a biological, a pharmaceutical, a food, a beverage, a textile, a metal, a plastic, a semiconductor. Additionally or alternatively, the specific product can even be a service product such as electricity, heating, air-conditioning, waste treatment such as recycling, chemical treatment such as breakdown or dissolution, or even incineration, etc. Accordingly, the industrial plant site 130 may be one or more of a chemical plant, a process plant, a pharmaceutical plant, a fossil fuel processing facility such as an oil and/or a natural gas well, a refinery, a petrochemical plant, a cracking plant, and the like. The industrial plant site 130 can even be any of a distillery, an incinerator, or a power plant. The industrial plant site 130 can even be a combination of any of the examples given above.

For performing the production process the industrial plant site 130 comprises a technical infrastructure, for example, operation assets 131, 135 which can be controlled by control parameters implemented by a process control system into the technical infrastructure. The technical infrastructure may comprise equipment or process units forming respective operation assets such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery e.g., a heavy duty rotating equipment such as a turbine, a generator, a pulverizer, a compressor, a fan, a pump, a motor, etc. Moreover, the industrial plant site 130 typically comprises a plurality of sensors 132, 133, 134, 136, 137, 138 that allow to measure operational parameters of the technical infrastructure, wherein the operational parameters are generally stored and can, for instance, be utilized by the process control system for controlling the production process in the industrial plant site 130. The operational parameters measured by the sensors may relate to various process parameters and/or parameters related to the equipment or the process units. For example, sensors may be used for measuring a process parameter such as a flowrate within a pipeline, a level inside a tank, a temperature of a furnace, a chemical composition of a gas, etc., and some sensors can be used for measuring vibration of a turbine, a speed of a fan, an opening of a valve, a corrosion of a pipeline, a voltage across a transformer, etc. The difference between these sensors cannot only be based on the parameter that they sense, but can even be based on the sensing principle that the respective sensor uses. Some examples of sensors based on the parameter that they sense may comprise: temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may, for example, be: piezo-electric sensors, piezoresistive sensors, thermocouples, impedance sensors such as capacitive sensors and resistive sensors, and so forth.

An industrial plant site 130 in the context of present teachings is a facility, sub-facility or infrastructure can also be part of a plurality of industrial plant sites. For example, the plurality of industrial plant site can refer to a compound of at least two industrial plant sites having at least one common industrial purpose. Specifically, a plurality of industrial plant site may comprise at least two, at least five, at least ten or even more industrial plant sites being physically and/or chemically coupled. The plurality of industrial plant sites may be coupled such that the industrial plant site forming the plurality of industrial plant sites may share one or more of their value chains, educts and/or products. The plurality of industrial plant sites may also be referred to as a compound, a compound site, a Verbund or a Verbund site. Further, the value chain production of the plurality of industrial plant sites via various intermediate products to an end product may be decentralized in various locations, such as in various industrial plant sites, or integrated in the Verbund site or a chemical park. Such Verbund sites or chemical parks may be or may comprise one or more industrial plant sites, where products manufactured in the at least one industrial plant site can serve as a feedstock for another industrial plant site. In such an embodiment with the production plant 130 being part of a plurality of production plants, a process control system of each of the industrial plant sites can be communicatively coupled or can even refer to the same process control system.

The apparatus 110 can be any dedicated or general computer comprising one or more processes configured such that the functions described in the following can be performed. In particular, in the following the functions performed by the processes of the apparatus 110 are associated with respective functional units of the apparatus 110 for a better overview. Generally, the functional units 111, 112, 113, 114 are only utilized to structure the functions performed by one or more processors of the apparatus 110 and can be performed by any computational suitable part of the apparatus 110, for instance, the functions can be performed by one or more processors of the apparatus 110. The apparatus 110 comprises a receiving unit 111, a cluster determination unit 112, potential determination unit 113 and a control signal providing unit 114.

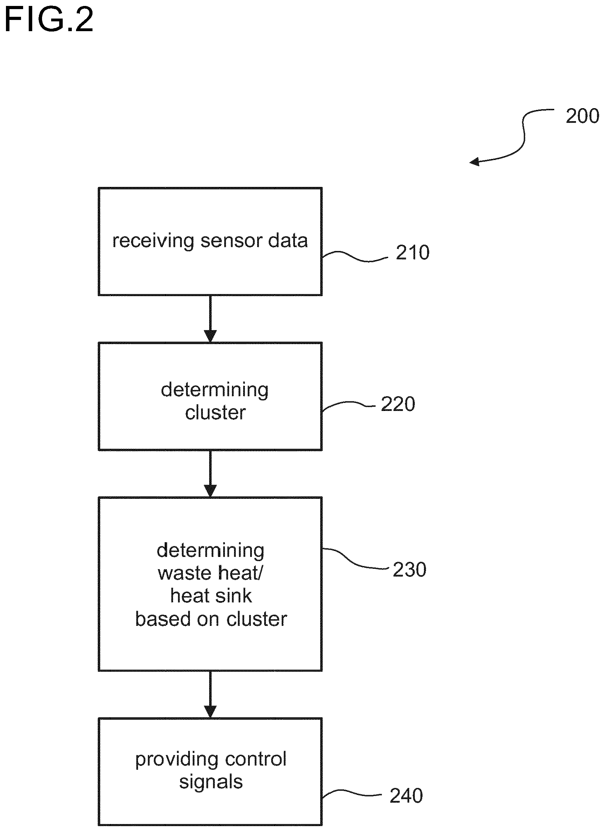

The receiving unit 111 is configured to receive sensor data from a plurality of sensors of an industrial plant site. In the example shown in Fig. 2, sensors 132, 133, 134, 136, 137, 138 provide sensor data, for instance, to database 120. Database 120 can be a long-term or short-term storage, for instance, can be an industrial plant historian database that documents all processes performed by the industrial plant site 130 by storing respective sensor data. In such a case, a receiving can refer to accessing the database 120 and retrieving from the database the respective sensor data. However, in other embodiments an input unit can be utilized, for instance, by a user, to input the respective sensor data or to indicate where the sensor data that should be utilized is stored, for example, on storage 120. Moreover, the sensor data can also be received directly from one or more of the sensors 132, 133, 134, 136, 137, 138, for example, via a respective interface. For example, the receiving unit 111 can be realized as such an interface to the sensors 132, 133, 134, 136, 137, 138.

The sensor data can comprise time series data and/or descriptive data. Time series data comprises results of measurements performed by the sensor and the descriptive data comprises descriptive information on the sensor. For example, the measurements performed by the sensor can be temperature measurements and the time series data then comprises the results of the temperature measurements. Preferably, the time series data further comprises respective time stamps that indicate when a respective measurement has been performed by the sensor. However, the time stamps can also be omitted and it can generally be known that the sensor will measure a quantity in a predetermined sequence, for instance, each minute, each hour, every 24 hours, etc. Further, the time series data can also comprise or be associated with a tag identifying the sensor such that the time series data is uniquely associated with the respective sensor. The descriptive data comprises any descriptive information on the sensor and can be provided in form of any kind of symbol or character string. For example, the descriptive data can comprise either numerical or literal characters but can also comprise special symbols. Moreover, the descriptive data can also be realized in form of the tag of the sensor, wherein in this case the tag of the sensor not only uniquely identifies the sensor but further comprises descriptive information on the sensor beyond the mere identity. Alternatively or additionally, the descriptive data can also be text data, for instance, a description in form of a human readable text.

The cluster determination unit 112 is then configured for determining a cluster of sensors indicating a contextual cohesion of the measurements of the respective sensors, wherein the cluster is determined based on the sensor data of the plurality of sensors. Generally, a contextual cohesion of the measurements of respective sensors means that the measurements are, in the respective context, related to each other. In particular, the contextual cohesion is given by the respective sensors forming a cluster being associated with the same operation asset of an industrial plant site. In the example shown in Fig. 1, the sensors associated with one of the operation assets form a cluster of sensors. For example, the sensors 132, 133 and 134 form a sensor cluster such that each of the sensors is associated with the operation asset 131 and thus measures a quantity that is in some way related with the operation asset 131 leading to a contextual cohesion of the measurements of the sensors 132, 133, 134. Further, sensors 136, 137 and 138 form another sensor cluster due to their association with the operation asset 135. Generally, the association between sensors does not have to be unique, i.e. at least some sensors associated with one operation asset can also be associated with another operation asset. For example, in a cases a sensor can be utilized to measure a mass flow between two operation assets, wherein the sensors thus measures for one operation asset the outflow and for the other the inflow. In such cases the sensor can be associated with both operation assets.

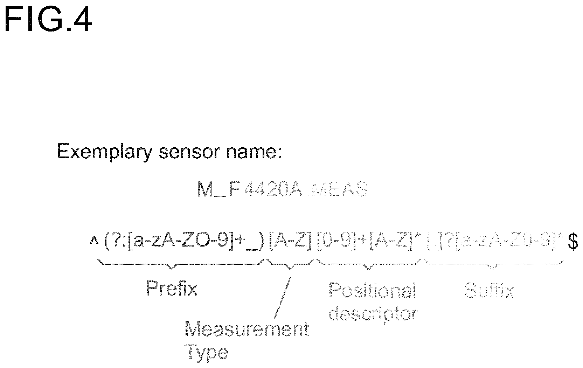

The cluster determination unit 112 is configured to determine the sensor clusters based on the sensor data of the plurality of sensors. Generally, the sensor data provides a plurality of information that can be utilized to determine a contextual cohesion of the measurements of the respective sensors in order to determine the respective cluster. In the following, some preferred examples will be described with respect to Figs. 4 to 6.

In a preferred embodiment, a tag provided by the sensor data is utilized for determining the sensor clusters. Generally, it has been found by the inventors that in most cases sensor tags are not created arbitrarily when installing the respective sensors but are created according to predetermined rules, wherein these rules can be different for different industrial plant sites. An example of a tag generated in accordance with predetermined rules is shown in Fig. 4. In this case, a tag is provided with a prefix that is generally utilized to determine to which plant on a plant site comprising a plurality of plants the sensor associated with the tag belongs. A further digit is utilized to indicate which quantity the sensor is measuring. Then in this example five digits are utilized to indicate the position of the sensor in the industrial plant. In particular, for this example, the position is provided by a positional descriptor that can map a 3D position of a sensor in a plant to a 1D ordered numbering. In the shown example, further some digits are utilized for additional information, for instance, to distinguish signals from the same sensor that nevertheless refer to different measurement types. Thus, in this example, the tag comprises a positional descriptor indicative of the position of the sensor. Since generally it can be assumed that sensors positioned within a certain radius next to each other belong to a sensor cluster and are associated with a respective operation asset, the positional descriptor can be utilized for determining the respective sensor clusters. For example, known rules for generating a tag for a sensor can be utilized to derive whether the positional descriptor indicates that the sensors belong to the same operation asset. For example, if the tag is always generated such that sensors belonging to the same operation asset are provided with the same positional descriptor or with a positional descriptor only differing in a predetermined way, the respective positional descriptors can be utilized for determining all sensors that belong to an operation asset. However, since the situation in most cases is more complex, also other rules can be utilized. In particular, it is preferred that a distance metric is determined based on the positional descriptors. For example, for most general cases it can be assumed that the positional descriptor of two sensors will differ dependent on the spatial and/or topological process distance of the sensors to each other. For example, the distance metric for sensors 132 and 133 belonging to the same operation asset and thus to the same process will be very similar, for instance, differing only in one digit, whereas it is very likely that the positional descriptors of sensors 133 and 136 belonging to different operation assets and thus either being spatially positioned far away from each other or belonging to completely different processes show a stronger difference, for instance, in two or more digits of the positional descriptor. Thus, based on the positional descriptor, a value being the distance metric can be defined that measures the indicated spatial and/or process topological difference of the sensors in the positional descriptor. One example of a definition of a distance metric could be to define the distance metric based on the longest common substring between the positional descriptors of different sensors. For example, the distance metric for two sensors in this case can be defined comprising a first value for one common digit, a second value for two common digits, a third value for three common digits, etc. Thus, in this example, the clusters can be defined based on the respectively defined first, second, third, etc. values of the distance metric.

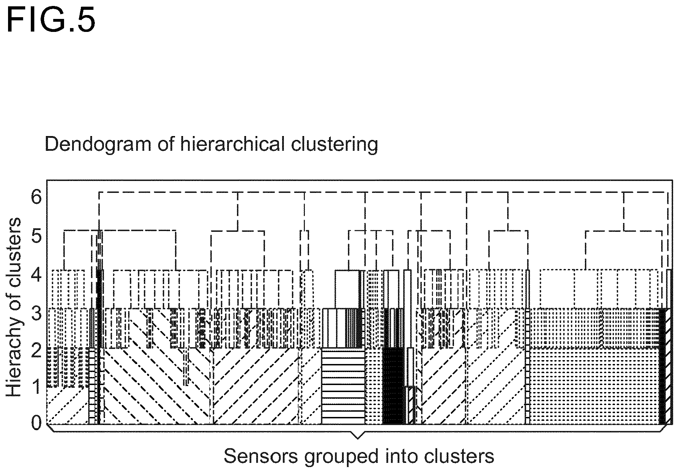

Generally, based on the distance metric the sensor clusters can then be determined. For example, if a distance metric is determined from each sensor of the exemplary industrial plant 130 to each other sensor of the exemplary industrial plant 130 it is clear that the distance metric will indicate for sensors 132, 133 and 134 a cluster of a low distance between these sensors and will further indicate another cluster between the sensors 136, 137 and 138 also with a low distance between these sensors, wherein for all other distance metrics between sensors of different clusters clearly a higher distance is indicated. Respective known methods for cluster analysis can thus be utilized. However, in a preferred embodiment, a hierarchical clustering is applied to the respective distance metric for the sensors. An example for such a dendrogram representing such a hierarchical clustering is shown in Fig. 5, wherein the dendrogram shows in this case the hierarchy of clusters for an industrial plant, wherein the clustering of the sensors on different hierarchical levels is clearly visible. In this example, an agglomerative hierarchical clustering algorithm has be utilized for generating the dendrogram. In this case each sensor is initially considered as a single-element cluster. At each step of the algorithm, the two sensor clusters that are the most similar with respect to the distance metric are combined into a new bigger cluster. This procedure is iterated until all points are member of just one single big cluster. With respect to the exemplary industrial plant site shown in Fig. 5 on the lowest level each sensor has a distance of zero to itself, wherein on the fourth and the thirds level, the clusters define the respective operation assets of the industrial plant. On higher hierarchical levels the sensors are associated with respective industrial plant sites or greater industrial complexes. Thus, utilizing a respective dendrogram or a similar sorting of the sensor metric, the sensor clusters can be determined, wherein it is preferred that the sensor clusters are determined such that the sensors are associated with a respective single operation asset of the industrial plant.

Additionally or alternatively, to determining of the sensor clusters based on the sensor tags, also other parts of a textual sensor description can be utilized. For example, if a descriptive text of a sensor is available as part of the sensor data, natural language processing can be utilized for parsing the text description for predetermined keywords or key text strings. For example, an operator of the industrial plant might indicate the respective text strings that are generally utilized for describing a position in the industrial plant in a text description or that are utilized to describe the association of the respective sensor with an operation asset. For example, an identifier of the operation asset itself can be utilized in a text description of sensors associated with the operation asset to indicate that the sensors are associated with the respective operation asset. However, in addition to the known and in most cases industrial plant specific textual strings, the parsing can also be configured to search for general text strings indicating a location or association of a sensor with an operation asset, for instance, for cases in which no specific rules for the text description are utilized when installing the sensor. The such derived concepts indicative of a position of the sensor and/or a relation to other sensors or to an operation asset of an industrial plant can then be utilized for determining the clusters. For example, if the text string directly comprises a concept that indicates the association of the cluster to an operation asset, this information can directly be utilized to associate the sensor to a cluster that belongs to the respective operation asset. However, also as described above, a distance metric can be utilized in this case. The information provided by the text description can also be utilized as addition to the analysis of the tag of the sensor as described above. For example, clusters determined based on a tag analysis can be confirmed by utilizing respective text descriptions. Moreover, if one or more sensors cannot be allocated utilizing the tag, it can be tried to associate these sensors using an available text description, and vise versa.

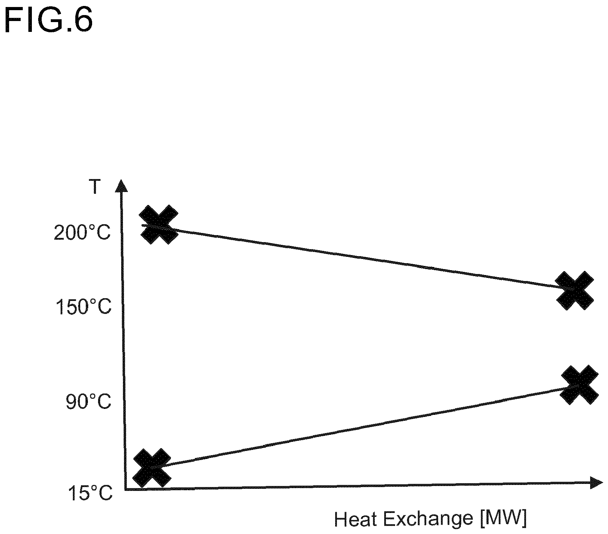

Additionally or alternatively to the above described possibilities of determining the clusters based on the descriptive data, sensor clusters can also be determined based on the time series data. For example, sensors associated with the same operation asset generally follow a certain measurement pattern that is associated with the processes performed by the respective operation asset. Thus, knowledge with respect to the processes performed in the industrial plant site together with physical laws can be utilized to determine sensor clusters based on the time series data. In a preferred embodiment, this possibility is utilized in order to validate clusters determined with other methods, for instance, by deriving position descriptors from a tag of a sensor. Moreover, this method can be utilized to determine which kind of operation asset is associated with the previously determined sensor cluster. In particular, heat exchangers that are known to provide the most potential for waste heat or heat sinks show a clear pattern of temperature measurements that can be identified. An example for such a typical pattern is shown in Fig. 6. Here, four sensors are identified as belonging potentially to a sensor cluster, measuring respective temperatures. In this case, the two higher temperatures denote a warm side of a heat exchanger and the two lower temperatures the cold side of the heat exchanger, wherein typically in the flow direction along the heat exchanger the temperature of a substance in the warm part of the heat exchanger decreases while it increases in the cold part of the heat exchanger. Rules for such a pattern for identifying heat exchangers can easily be implemented and it can be determined if the potential sensor cluster is associated with a heat exchanger. Moreover, even machine learning based methods can be utilized for detecting whether one or more sensors are associated with an operation asset, in particular, a heat exchanger based on learned patterns.

The determination unit 113 is then configured for determining a waste heat and/or heat sink potential for a respectively determined cluster based on the sensor data of the sensors belonging to the cluster. In particular, the time series data provides measurements that can be utilized to determine whether the operating unit associated with the sensor cluster provides a waste heat and/or heat sink potential. For example, physical laws describing the processes performed by a respective operation asset associated with a sensor cluster can be utilized for calculating waste heat. For instance, for a heat exchanger respective mass flow measurements and temperature measurements can be utilized for calculating an energy and mass flow balance that indicates a respective waste heat potential. However, for other processes also other rules can be utilized.

The control signal providing unit 114 is then configured to provide control signals based on the waste heat and/or heat sink potential for optimizing an energy consumption of the industrial plant site. For example, the control signal providing unit 114 can provide the control signals to the industrial plant 130. Generally, the control signals can refer to control signals that control a display that highlights to a user operation assets of the industrial plant that provide a potential waste heat and/or heat sink. For example, on a schematic display of the industrial plant showing one or more operation assets, operation assets for which it has been identified that they might provide a waste heat source can be shown highlighted in red, wherein operation assets that can provide a heat sink can be shown in a blue color. However, also any other kind of display can be utilized to provide the user with the information on the waste heat and/or heat sink potential. The user can then utilize this information for optimizing the energy consumption of the industrial plant 130, for instance, by controlling the respective processes performed by the operation assets accordingly in particular to avoid waste heat or to integrate the waste heat with a heat sink. Moreover, the control signals can directly provide a control of the industrial plant or at least suggest respective process parameters to a user that would allow for a direct controlling of the industrial plant to reduce, for instance, waste heat in an operation asset. Depending on the process performed in the operation asset producing waste heat, the process parameter can indicate to change, for instance, a temperature of a heater, a pressure or any other parameter of the operation asset. Moreover, the control signals can be provided to a maintenance program that can then be caused to issue a maintenance protocol that allows for respective changes in the hardware of the industrial plant that allow for the reduction of waste heat or for the utilization of waste heat, for instance, to provide the waste heat to a heat sink. For example, the maintenance protocol can cause a maintenance crew to install a heat pump utilizing the waste heat of an operation asset. Moreover, the maintenance protocol can also cause a maintenance crew to configure an operation asset providing waste heat and an operation asset acting as a heat sink such that the waste heat can be utilized for heating the operation asset providing the heat sink. Thus, the apparatus 110 allows for assisting in the optimization of energy consumption of the industrial plant 130.

Fig. 2 shows schematically and exemplarily a method 200 for assisting energy consumption optimization of an industrial plant site. Generally, the method 200 can be performed as a computer program on the apparatus 110. Thus, the functions described in the following with respect to the method 200 can be realized in the same way as the functions described with respect to apparatus 110 above. In a first step 210, the method comprises a step of receiving sensor data from a plurality of sensors of an industrial plant site. In a further step 220, a cluster of sensors indicating a contextual cohesion of the measurements of the respective sensors is determined based on the sensor data of the plurality of sensors. Based on the determined clusters in a next step 230, a waste heat and/or heat sink potential for a respective cluster is determined based on the sensor data of the sensors belonging to the respective cluster. Further, in a last step 240, control signals based on the waste heat and/or heat sink potential for optimizing an energy consumption of the industrial plant site are provided.

Generally, above an approach is outlined to extract additional domain-related information from available measurement data of industrial plants in order to detect waste heat assets. In a preferred embodiment, the measurement data of mass flows and temperatures sensors is mapped into a domain model of heat exchanges based on data-driven heuristics, as described above.

Generally, to search for adequate transformation technologies and increase overall energy efficiency of a production site and/or network, waste heat sources must be known to the decision maker to enable optimal production site planning. However, typically a lack of transparency is found when it comes to waste heat within a production site. So far waste heat has not played a critical role for plant operators since the emission of waste heat does not cost anything economically. As a result, temperature and mass flow measurements within pipes crucial for waste heat calculation are often missing or the data is only used for general control processes. To provide transparency not only on a possible waste heat source but also on the location and characteristics of waste heat emitters as part of the waste heat potential within a production unit, the following time series data within the context of the production unit is preferably utilized: temperature before an heat exchange, temperature after an heat exchange, mass flow of heat exchanging medium and optionally also properties of heat exchanging media, kind of heat exchange: sensible vs latent. All of these values need to be matched to an operating unit, in particular, an heat exchanging entity, i.e. specific operations units within the plant such as heat exchangers, exothermic reactors, etc. However, the available information is often only provided in form of process flowsheets and P&ID's (Piping & Instrumentation Diagram) that outline the topology of a plant with the sensor location in PDF-format. The only data source available for direct automatic computational access are historic and/or live measurements of sensors outlined in diagrams. These are often stored per sensor ID, i.e. tag, as value-quality-time triplets, i.e. time series data, without any contextualization within the plant diagram other than the visual flag of the sensor ID at the pipe or unit operation where it is located. Consequently, up until now the only way to identify and calculate waste heat in this set-up would be to look through the PDF-files step by step, identifying and manually setting up energy balancing, querying the respective sensor data from a data base and inserting them into the energy balance to calculate waste heat emission. To mitigate the tedious, time-consuming and error-prone work at this point, the invention as described above allows to identify heat exchanges in a scalable way with much less manual workload and no need to contextualize the available sensor measurements in the plant context. In the following more details on a preferred embodiment of the invention as described above are provided.

Preferably, as input to the waste heat and/or heat sink potential determination time series data from sensor measurements, for example, retrieved from PIMS server are utilized . The time series data can be processed via time-weighted average function to be on an even time-grid. Further, sensor meta data, for example, descriptive data, such as unit of measurement and tag descriptions can also be utilized. In an embodiment, from sensor-IDs, i.e. tags, patterns can be derived to contextualize measurements in the plant context. For example, in many cases sensors belong to the same operation assets have similar names, thus derive a positional descriptor from the senor ID can be derive, for example, via regex-parsing. In particular, from the positional descriptor a customized distance metric based on the longest common substring between sensor IDs can be derived, thereby normalizing for different string-lengths. Further, by applying hierarchical clustering to the above distance metric, sensors can be grouped together in a context. From a dendogram of the hierarchical clustering, clear clusters on different levels of hierarchy can be retrieved. For example, on a lowest level, each sensor has a distance of 0 to itself. With increasing distance metric, the plant context in which sensors are clustered grows. For example, as shown in the example of Fig. 5, the clusters on level 5 can be identified as process groups within a plant, which stand for a stand-alone step towards the final product within a production site. On the fourth and third level clusters can be found that describe single unit operations/devices within the production site that can potential perform heat exchange. Then the identified clusters can be filtered for groups that perform heat exchange by including domain knowledge to find patterns. For example, a string-parsing can be performed on a sensor description, if available to determined, for example, concepts that indicate a heat exchange. Further, temperature deltas between sensors can be determined within one cluster to match the hot and cold side the exchange. A typical heat exchange has four temperatures, the two lower ones denoting the cold side, the higher ones denoting the warm side. Further, a normal operating time point can be derived from the time series data to determine an operating time point for a representative plant behavior. Then, for determined clusters with heat exchange a waste heat potential can be determined by using mass flow measurement and a temperature delta for instance with the equation: Q~ m*ΔT with Q is the heat, m the transported mass and ΔT the temperature difference.

Based on the determined waste heat potential, respective areas in the plant where waste heat is emitted can be identified and a waste heat magnitude and characteristics can be calculated from identified sensors and their normal operating point.

The above described invention has, in particular, the advantage that the approach is mainly data-driven such that no contextualized data asset is required. Moreover, the invention allows for a high-degree of automation and is scalable from only assessing one operation asset to assessing parts of a production site to assessing the whole production site or even whole compound sites. Further, no thermodynamic property data is required for the detection of heat exchange potentials and semi-automatic data contextualization in the plant topology is facilitated.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of the sensor data, the determining of the clusters, the determining of the waste heat potential, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. A computer implemented method for assisting an energy consumption optimization of an industrial plant site (130), wherein the industrial plant site comprises a plurality of sensors (132, 133, 134, 136, 137, 138), in particular, comprising mass flow and temperature sensors, providing time series data, wherein the method (200) comprises:
receiving (210) senor data from the plurality of sensors (132, 133, 134, 136, 137, 138), wherein the sensor data of a sensor comprises time series data and/or descriptive data, wherein the time series data comprises measurements performed by the sensor and the descriptive data comprises descriptive information on the sensor,
determining (220) a cluster of sensors indicating a contextual cohesion of the measurements of the respective sensors, wherein the cluster is determined based on the sensor data of the plurality of sensors (132, 133, 134, 136, 137, 138),
determining (230) a waste heat and/or heat sink potential for the cluster based on sensor data of the sensors belonging to the cluster, and
providing (240) control signals based on the waste heat and/or heat sink potential for optimizing an energy consumption of the industrial plant site (130).

2. The method according to any of the preceding claims, wherein the sensor data comprises descriptive data, wherein the descriptive data comprises a tag identifying the sensor, and wherein determining the cluster of sensors comprises deriving positional descriptors for the sensors from the tags of the sensors and determining the cluster based on the positional descriptor, wherein the positional descriptor is indicative of the position of the sensor in the industrial plant site.

3. The method according to claim 2, wherein based on the positional descriptors distance metrics for the sensors are determined, wherein a distance metric is indicative for a distance between a sensor and at least one other sensor, and wherein the cluster is determined based on the distance metric.

4. The method according to claim 3, wherein the cluster is determined based on the distance metrics by utilizing a hierarchical clustering utilizing the distance metrics as indication for the hierarchy.

5. The method according to any of the preceding claims, wherein the sensor data comprises descriptive data in the form of a text description and wherein the determining of a cluster comprises a natural language processing of the text descriptors to derive concepts indicative of a position of the sensor and/or relations to other sensors in the industrial plant site, and determining the cluster based on the derived concepts.

6. The method according to any of the preceding claims, wherein the sensor data comprises time series data and wherein the determining of a cluster comprises deriving relations between sensors based on the time series data and determining the cluster based on the derived relation.

7. The method according to any of the preceding claims, wherein determining of the waste heat and/or heat sink potential for the cluster comprises determining more than one cluster based on the time series data of the plurality of sensors and selecting the cluster for which a waste heat and/or heat sink potential is determined, wherein a cluster is selected that refers to a single operation asset of the industrial plant site and the waste heat and/or heat sink potential is determined for the selected single operation asset of the industrial plant site.

8. The method according to claim 7, wherein the selected single operation asset is a heat exchanger unit of the industrial plant site.

9. The method according to any of claims 7 and 8, wherein the cluster is selected using provided domain knowledge with respect to the single operation assets of the industrial plant site.

10. The method according to any of the preceding claims, wherein the sensor data comprises mass flow and/or temperature measurements as part of time series data and wherein the waste heat and/or heat sink potential for a cluster is determined based on a mass flow and/or temperature difference determined between sensors of the cluster.

11. The method according to any of the preceding claims, wherein the control signal comprises information on a part of the industrial plant site where waste heat is emitted and/or where a heat sink is located.

12. The method according to any of the preceding claims, wherein the control signal comprises process parameters for controlling one or more operation assets of the industrial plant to reduce waste heat identified based on the waste heat potential.

13. The method according to any of the preceding claims, wherein the control signal comprises process parameters for controlling one or more operation assets such that a determined waste heat is integrated with a determined heat sink.

14. A apparatus for assisting an energy consumption optimization of an industrial plant site, wherein the industrial plant site comprises a plurality of sensors comprising mass flow and temperature sensors providing time series data, wherein the apparatus (110) comprises one or more processors configured for:
receiving senor data from the plurality of sensors, wherein the sensor data of a sensor comprises time series data and/or descriptive data, wherein the time series data comprises measurements performed by the sensor and the descriptive data comprises descriptive information on the sensor,
determining a cluster of sensors indicating a contextual cohesion of the measurements of the respective sensors, wherein the cluster is determined based on the sensor data of the plurality of sensors,
determining a waste heat and/or heat sink potential for the cluster based on sensor data of the sensors belonging to the cluster, and
providing control signals based on the waste heat and/or heat sink potential for optimizing an energy consumption of the industrial plant site.

15. A computer program product for assisting an energy consumption optimization of an industrial plant site, wherein the computer program product comprises program code means causing an apparatus according to claim 14 to carry out the method according to any of claims 1 to 13.
